# EUROPEAN PATENT SPECIFICATION

(11) **EP 1 081 443 B1**
(45) Date of publication and mention of the grant of the patent: **07.06.2006**
(21) Application number: 00850147.0
(22) Date of filing: 05.09.2000
(51) Int. Cl.: F24F 13/02, F16L 59/14

(54) **Ventilation duct construction and method**
Verfahren und Herstellung eines Lüftungskanals
Méthode et construction d'une gaine de ventilation

(30) Priority: 06.09.1999 SE 9903138
(43) Date of publication of application: 07.03.2001
(73) Proprietor: Saint-Gobain Isover Aktiebolag, 260 50 Billesholm (SE)
(72) Inventor: Tigerfeldt, Staffan, 252 84 Helsinborg (SE)
(74) Representative: Henningsson, Gunnar

(56) References cited:
- WO-A-93/11327
- DE-C- 508 731
- US-A- 2 078 606
- US-A- 2 613 166
- US-A- 3 902 744
- US-A- 3 981 689

## Description

### Field of the Invention

The present invention relates to a ventilation duct construction, comprising a ventilation duct which is provided with insulation and through which air is allowed to flow, as well as a method for increasing the fire-retardant capability of a ventilation duct provided with insulation.

Fire-retardant capability is here defined as the capability to resist such a temperature rise of the duct air as causes a temperature rise on the outside of the construction.

### Technical Background

To prevent fire from spreading in ventilation ducts, it is common to provide the ventilation ducts with some kind of insulating material, such as rock wool, which is resistant to high temperatures and thus prevents fire from spreading. Conventionally, insulation is arranged on the outside of the wall of the duct and is in most cases provided with an outer metal cover.

The ventilation ducts serve to convey air, but noise also propagates easily. By insulating, at least in some sections of the ducts, the inside of the ducts with sound-absorbing material, such as rock wool or glass wool, and lately also materials which are less fire-retardant, e.g. polyester insulation, it is possible to absorb noise efficiently. Hereinafter, sound-absorbing sections of ventilation ducts will also be referred to as sound absorbers.

In case of fire, it is very important to keep down the temperature of the outside of insulated ventilation ducts or sound absorbers as long as possible to increase the fire safety of the surroundings and close objects.

Prior art WO93/11327A discloses one way of providing fire-retardant capability to ducts in the form of an insulated ventilation duct component and method of producing the same. The duct component comprises an external metal sheet casing and an internal metal sheet casing. An insulating material layer is arranged in the space between the external and internal casings. Further, the external and internal casings are interconnected by one or more perforated metal sheet elements which cover the corresponding end surfaces of the insulating material layer. The perforations reduce the amount of heat that might be conducted between the internal and external casings.

Since sound absorbers often are enlarged in cross-section compared with other ventilation duct sections and contain insulation with a limited fire-retardant capability, the problems of bulkiness and of obtaining a sufficient degree of fire-retardancy may be accentuated.

### Summary of the Invention

Therefore, one object of the present invention is to provide an insulated ventilation duct construction, in which the time during which the outside temperature can be kept down in case of fire is prolonged, while the construction remains compact.

It is also an object to provide a simple method for increasing the fire-retardancy of an insulated ventilation duct or duct sound absorber.

According to the present invention, these objects are achieved by means of a ventilation duct construction and a method, which have the features stated in the appended claims.

The invention is thus based on the understanding that the fire-retardant capability can be increased by arranging, at least partially, a supplemental thin boundary layer outwardly of the insulated duct or the sound absorber, which boundary layer, on the one hand, provides a supplemental cover configuration having what might be considered as a heat-exchange function and, on the other, provides an additional air insulation effect.

According to the invention, a protective sheet made of metal is thus arranged at least partially around and close to the duct and its associated insulation, not in direct contact with the insulated duct, but instead at a short distance from the same so that an air gap is formed therebetween.

Surprisingly, it has been found that this simple measure imparts a much improved fire-retardant capability to the construction. Preferably, the thermal bridge between the protective sheet and the duct and its associated insulation is made very small, which can easily be achieved with the aid of suitably designed spacer means. Thus the time of heating the protective sheet is prolonged and in particular the time of heating its outside, i.e. the outside of the entire construction.

One advantage of said construction is that the protective sheet, at least initially, has a cooling effect on the hot air in the gap which has been heated by fire. The thicker the selected protective sheet, the better the cooling capability. The selection of the width of the air gap as well as the thickness of the protective sheet must be adjusted to the demands on weight and space. It has been found that a satisfactory effect is obtained even when using a very thin protective sheet and a very small air gap. The protective sheet is made of metal, such as galvanised steel sheet. A typical protective sheet of galvanised steel sheet has a thickness of about one millimetre or a few millimetres, preferably about 1 mm. The size of the air gap, i.e. the distance between the protective sheet and the insulated duct, is typically about one millimetre or a few millimetres, preferably about 1 mm.

The protective sheet also has another effect, namely that of distributing the heat over the protective sheet in case it is locally exposed to a considerable temperature rise. This function is particularly pronounced if the protective sheet is made of a material having good thermal conductivity.

According to one embodiment, the protective sheet can be provided with through-holes to improve the circulation of air and heat exchange. This is because cold ambient air is to be drawn into the gap through openings at the ends of the protective sheet, when the hot air leaks out of the gap through the holes of the protective sheet. As a result, a circulation of air is provided which contributes to the cooling of the air gap and the protective sheet. The number, shape and size of the holes can be selected depending on the desired qualities of the protective sheet. However, the size and the number of the holes have to be chosen, since too big or too many holes could counteract the purpose of the protective sheet. It has, however, been found that good effects are achieved also when the total area of the holes equals half the area of the protective sheet.

Depending on the circumstances and the security aspects that must be taken into consideration, the position of the protective sheet may vary. It is possible to surround an entire ventilation duct of about one hundred metres with a protective sheet in accordance with the invention, preferably in separate sections so as to provide openings for the intake of air. But it is also possible to provide a ventilation duct with protective sheet only locally along one or more specially selected sections, such as a sound absorber section. Irrespective of the above-mentioned alternatives, it is not necessary to arrange protective sheet along the entire circumference of the ventilation duct. It is quite possible that extra protection is needed only along a part of the circumference of the duct.

The cross-sectional shape of the ventilation duct or the sound absorber may vary. Typical shapes are rectangular and circular, but other shapes are also feasible, since the invention is not limited to any particular shape of the duct. The shape of the protective sheet is suitably selected according to the shape of the ventilation duct or the sound absorber, and preferably in such manner that the shapes conform with each other.

The manner in which the duct is insulated does not limit the scope of the invention. It is, for instance, possible to arrange, on the outside of the wall of the duct, a standard insulation, the outside of which is a metal cover adjacent to which the protective sheet is arranged with the air gap. A ventilation duct section with sound-absorbing insulation is also possible, the protective sheet being arranged so that an air gap forms between the same and the outer cover of the sound absorber. Other types of insulation are, of course, also feasible.

As already mentioned, the protective sheet can be kept at a suitable distance from the ventilation duct with the aid of spacer means so that said air gap forms. As examples of spacer means, mention can be made of pins, screws, rivets and distance plates which are arranged between and fixed to the protective sheet and/or the wall of the ventilation duct or the insulation placed thereon, with or without a cover.

The design of the spacer means should allow the thermal bridge to be minimised. Thus the spacer means should be small and limited to a small number. It is also possible to form the air gap without any connection at all, and thus without a thermal bridge, between the protective sheet and the ventilation duct. One possibility is to equip the construction with magnets so that the protective sheet is kept "floating" about the ventilation duct. If there is enough space, another possibility of completely avoiding thermal bridges is to provide the protective sheet with an outer suspension which is connected to external holding elements.

Even if the protective sheet has been discussed so far in connection with both ordinary insulated ventilation ducts and duct sound absorbers (ventilation duct sections with sound-proofing), the function of the protective sheet is the same, irrespective of the type of duct to which it is applied. The use of a protective sheet according to the invention does not have to be limited to these variants but could also, for instance, be used in connection with heat or condensation insulated ducts.

Besides the discussed ventilation duct construction, the present invention, as already mentioned, relates to a method for increasing the fire-retardant capability of an insulated ventilation duct. According to the method, this is achieved by placing a protective sheet made of metal externally at least partially around the insulated duct at such a distance from the same that an air gap forms between the protective sheet and the insulated duct. The invention is thus also applicable to existing installations, both to a conventional existing sound absorber and to other ventilation duct sections.

The invention can also facilitate the mounting of a fire-protected sound absorber in a section of a ventilation duct. It is thus possible, for instance, to remove the fire insulation in the desired section, perforate the duct wall to "let out the sound", arrange sound insulation with an outer cover which forms the duct wall on the perforated duct wall and finally arrange the protective sheet according to the invention around the outer cover so that an air gap forms between the protective sheet and the outer cover.

One common way of arranging a sound absorber in an existing ventilation duct is to cut off the duct and insert by splicing the sound absorber. The one skilled in the art will realise that a sound absorber equipped with a protective sheet according to the present invention can also be arranged in a ventilation duct in the same manner.

The invention makes it possible to lower the requirements placed on the absorbing material of a sound absorber as concerns fire-retardancy for the benefit of improved absorbency, resulting in the possibility of reducing the dimensions in the transverse direction, while maintaining the same total fire-retardancy level.

### Brief Description of the Drawings

Fig. 1 schematically shows a longitudinal cross-section of a ventilation duct construction according to an embodiment of the present invention.
Fig. 2 schematically shows a cross-section of the construction in Fig. 1 along the line II-II.
Fig. 3 schematically shows a perspective view of the sound absorber in Figs 1 and 2.
Fig. 4 schematically shows a longitudinal cross-section of a ventilation duct construction according to another embodiment of the present invention.
Fig. 5 schematically shows a cross-section of the construction in Fig. 4 along the line V-V.
Fig. 6 shows a diagram in which a comparison is made between a sound absorber having a protective sheet according to the present invention and a sound absorber without a protective sheet.

### Description of Preferred Embodiments

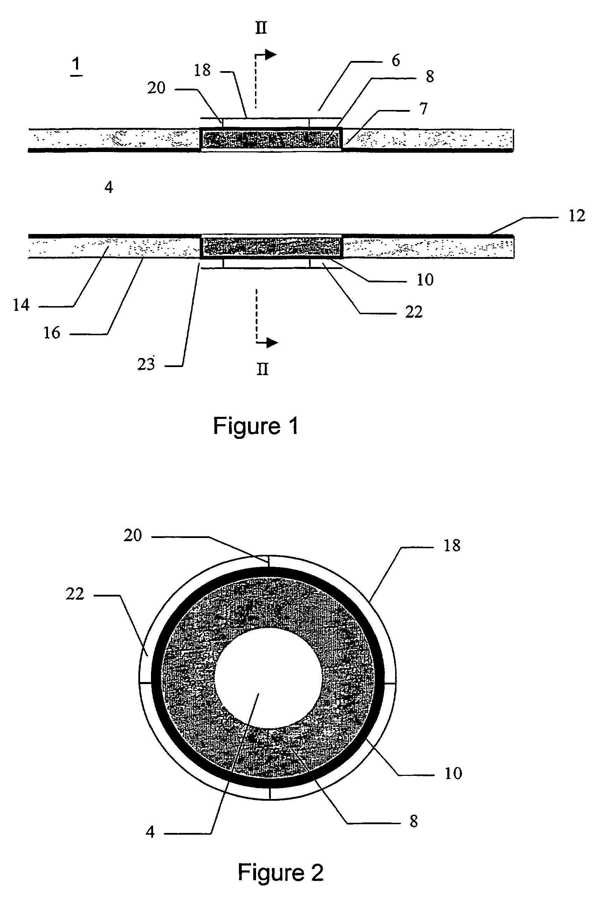

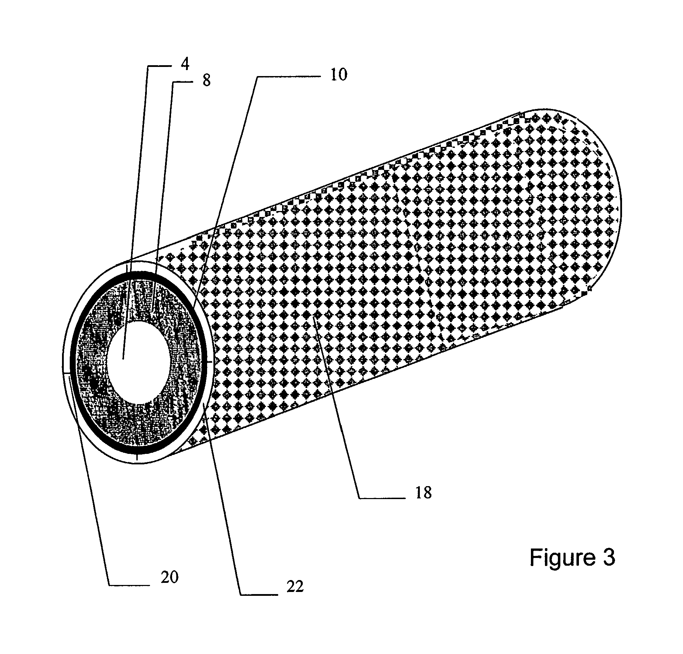

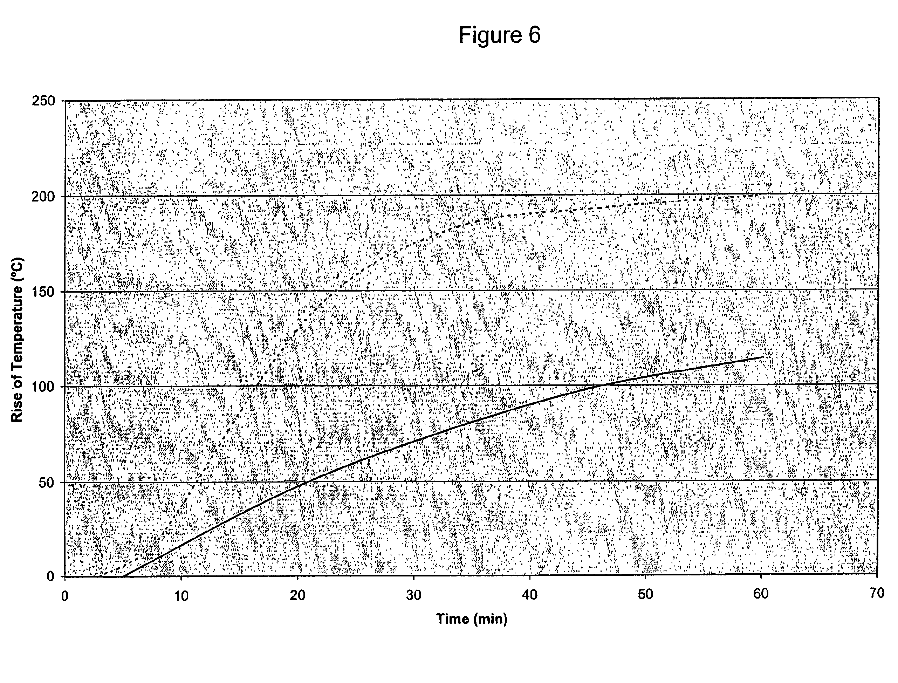

Fig. 1 schematically shows a longitudinal cross-section of a ventilation duct construction 1 according to an embodiment of the present invention. The Figure illustrates part of a ventilation duct 4 through which air is allowed to flow. The ventilation duct 4 is provided with a sound absorber section 6, which is fixed by means of annular flanges 7 projecting over and surrounding the wall 12 of the ventilation duct 4. In usual manner, the sound absorber 6 comprises an annular sound insulation 8 which is made of glass wool and which is open inwards to absorb noise propagating inside the ventilation duct 4. The sound insulation 8 is placed at an outer cover 10 of the sound absorber 6. On each side of the sound absorber 6, a fire insulation 14 made of rock wool is arranged on the outside of the wall 12 of the ventilation duct 4, said fire insulation 14 being delimited outermost by a metal cover 16. The wall 12 of the ventilation duct 4 and its associated fire insulation 14 and metal cover are joined to the sound absorber 6 by means of the flanges 7, so that the wall 12 of the ventilation duct 4 merges into the duct-forming outer cover 10. A sleeve-shaped protective sheet 18 which has a thickness of about 0.7 mm and is made of galvanised steel sheet is arranged around the outer cover 10 of the sound absorber 6 in accordance with the invention. Rivets 20 which are arranged between the protective sheet 18 and the outer cover 10 keep the protective sheet 18 at a distance of about 1 mm from the outer cover 10 so that an air gap 22 forms therebetween. Openings 23 at the ends of the sheet allow cold ambient air to enter into the gap. The protective sheet is also perforated (which is shown in Fig. 3), and therefore a satisfactory air circulation with a cooling effect is obtained. The sound absorber 6 which is provided with the protective sheet 18 obtains considerably increased fire-retardancy compared with a sound absorber without a protective sheet. This will be discussed in more detail in connection with Fig. 6.

Fig. 2 schematically shows a cross-section of the construction in Fig. 1 along the line II-II. It is apparent that in this embodiment the sound absorber is round in cross-section.

Fig. 3 schematically shows a perspective view of the sound absorber in Figs 1 and 2, a perforated protective sheet 18 being illustrated, which provides a satisfactory air circulation, resulting in cooling of the protective sheet 18 and the air gap 22.

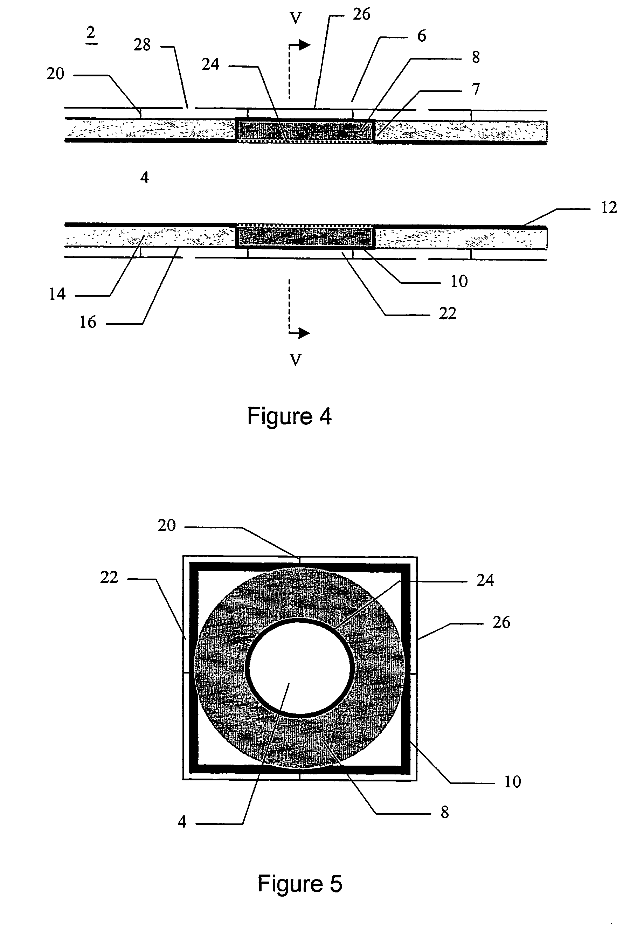

Fig. 4 schematically shows a longitudinal cross-section of a ventilation duct construction 2 according to another embodiment of the present invention. In this Figure, the same reference numerals are used as in Fig. 1 for equivalent construction components. In contrast to the embodiment in Fig. 1, the wall 12 of the ventilation duct, adjacent to the sound absorber section, merges into the wall 24 of a foraminated pipe, which is an integral part of the sound absorber. The foraminated pipe through which noise is emitted serves as a support for the sound insulation 8 resting thereon. Also in this case, the sound insulation 8 is, in usual manner, provided with an outer cover 10. Yet another difference is that the protective sheet 26 according to this embodiment is arranged not only around the sound absorber 6, but also around adjoining sections of the ventilation duct part. Consequently, increased fire-retardancy is obtained for the critical sound absorber section as well as adjoining sections. In the Figure, the protective sheet 26 is divided so that openings 28 allow the inflow of cooling air in a manner corresponding to that of the openings 23 in Fig. 1. A very good effect is, however, obtained for the protective sheet 26 also without the openings 28.

Fig. 5 schematically shows a cross-section of the construction in Fig. 4 along the line V-V. As shown, the sound absorber in this embodiment is quadrangular in cross-section, which is to illustrate that the sound absorber is connected to a ventilation duct with quadrangular cross-section.

Figs 1-5 are only shown for the purpose of exemplification and thus not according to scale. In addition, it goes without saying that the person skilled in the art will understand that there are many other embodiments within the scope of the invention. The sound absorber in Fig. 1 may, for instance, be provided with a foraminated pipe according to the construction in Fig. 4, just like the sound absorber in Fig. 4 can be designed in a different manner, without a foraminated pipe. Moreover, the cross-sectional shapes are exchangeable, as is also the length of the protective sheet, and it is possible to select either a perforated or a non-perforated protective sheet.

Fig. 6 shows a diagram in which a comparison is made between a sound absorber with a protective sheet according to the present invention and a sound absorber without a protective sheet. Fire tests were performed by connecting a furnace to an inlet end of the respective sound absorbers, so that the air duct of the sound absorbers was connected with the furnace air. The temperature of the furnace was increased according to a standard fire curve (to about 600° C after 6 min and up to slightly more than 900° C after 60 min). Several thermoelements were placed on the outside of the respective constructions, i.e. on the outside of the protective sheet and the outside of the cover of the sound absorber, respectively. In the Figure, temperature values measured by a thermoelement, which was placed in the centre of the respective constructions, are compared. The dashed curve shows the temperature change on the outside of an ordinary sound absorber without any protective sheet. The unbroken curve shows the temperature change on the outside of an inventive protective sheet which is arranged on a sound absorber. As clearly appears from the curves, a marked difference is obtained between the sound absorber with a protective sheet and the sound absorber without a protective sheet. The steep inclination at the beginning of the dashed curve is also worth noting. After only not quite ten minutes, the outside temperature of the conventional sound absorber increases dramatically, whereas when comparing with the sound absorber provided with a protective sheet an even and slowly increasing temperature can be noted. As already suggested, measurements have also been made at other measuring points than in the centre of the sound absorbers, such as at the inlet end, at the other end and at a plurality of points in between. However, for the sake of clarity we have chosen to illustrate the difference with the measurement in the centre. It can, however, be mentioned that at all measuring points the sound absorber which is provided with protective sheet exhibited the lowest temperatures after the 60 min long fire test. At certain measuring points, there was a difference of as much as 150° C between the sound absorber with protective sheet and the sound absorber without protective sheet. The protective sheet which was used in the test was not perforated and had a thickness of 0.7 mm and was placed around the sound absorber so that the air gap had a width of 1.0 mm. The sound absorber had the following dimensions: length 500 mm, width 285 mm, height 215 mm.

## Claims

1. A ventilation duct construction (1), comprising a ventilation duct (4) through which air is allowed to flow, the duct being insulated by means of insulation (8) in connection with the wall (12) of the duct, **characterised in that** a protective sheet (18,26) made of metal is arranged externally at least partially around the duct (4) with its associated insulation (8) at such a distance that an air gap (22) is formed between the protective sheet (18,26) and the insulated duct (4), whereby the fire-retardant capability, measured as the capability to resist such a temperature rise of the duct air as causes a temperature rise on the outside of the construction, that is on the outside of the protective sheet (18,26), is considerably increased.

2. A ventilation duct construction (1) as claimed in claim 1, wherein an opening (23) for air intake is arranged at the respective ends of the protective sheet (18,26) so that ambient air is allowed to enter between the protective sheet and the insulated duct (4).

3. A ventilation duct construction (1) as claimed in claim 1 or 2, which comprises, at least at a section of the duct wall, sound insulation inside an outer cover (10) with a view to absorbing noise and thus providing a sound-absorbing function, the air gap (22) being formed between the protective sheet (18,26) and the outer cover.

4. A ventilation duct construction (1) as claimed in claim 3, wherein said outer cover (10) constitutes the duct wall (12).

5. A ventilation duct construction (1) as claimed in claim 3, wherein said sound insulation (8) is supported from the inside by a foraminated support construction, preferably a perforated pipe, the support construction constituting the duct wall.

6. A ventilation duct construction (1) as claimed in any one of the preceding claims, which comprises, at least at a section of the duct wall (12), fire insulation (8) which is arranged on the outside of the duct wall (4) the air gap (22) eing formed between the protective sheet (18,26) and the fire-insulated duct wall (4).

7. A ventilation duct construction (1) as claimed in claim 6, wherein the fire insulation on the outside of the duct wall (4) is provided with an outer surface layer, preferably a metal cover.

8. A ventilation duct construction (1) as claimed in any one of the preceding claims, wherein spacer means (20) are arranged to dimension said air gap (22).

9. A ventilation duct constructions (1) as claimed in claims 7 and 8, wherein said spacer means (20) extend between the protective sheet and said surface layer.

10. A ventilation duct construction (1) as claimed in any one of claims 3-5 and claim 8, wherein said spacer means (20) extend between the protective sheet (18,26) and said outer cover.

11. A ventilation duct construction (1) as claimed in any one of the preceding claims, wherein said air gap (22) distance is about one millimetre or a few millimetres, preferably about 1 mm.

12. A ventilation duct construction (1) as claimed in any one of the preceding claims, wherein the thickness of the protective sheet (18, 26) is about one millimetre or a few millimetres, preferably about 1 mm.

13. A ventilation duct construction (1) as claimed in any one of the preceding claims, wherein the protective sheet (18, 22) is provided with through-holes.

14. A method for increasing the fire-retardant capability of a ventilation duct (4) which is insulated by means of insulation (8) in connection with the wall (12) of the duct,
**characterised by** placing a protective sheet (18,26) made of metal externally at least partially around the insulated duct at such a distance that an air gap (22) forms between the protective sheet and the insulated duct.

15. A method as claimed in claim 14, which further comprises the step of arranging the protective sheet (18, 26) that ambient air is allowed to enter between the protective sheet and the insulated duct (4) at the respective ends of the protective sheet.

## Patentansprüche

1. Belüftungskanalaufbau (1), umfassend einen Belüftungskanal (4), durch den Luft zu strömen zugelassen ist, wobei der Kanal durch isolationsmittel (8) in Verbindung mit der Wand (12) des Kanals isoliert ist,
**dadurch gekennzeichnet, dass** ein aus Metall gefertigtes Schutzblech (18, 26) äußerlich wenigstens teilweise um den Kanal (4) mit seiner zugehörigen Isolation (8) mit einem derartigen Abstand angeordnet ist, dass ein Luftspalt (22) zwischen dem Schutzblech (18, 26) und dem isolierten Kanal (4) gebildet ist, wodurch das feuerhemmende Vermögen, gemessen als das Vermögen, einem solchem Temperaturanstieg der Kanalluft zu widerstehen, der einen Temperaturanstieg an der Außenseite des Aufbaus, das heißt, an der Außenseite des Schulbuches (18, 26), verursacht, wesentlich erhöht ist,

2. Belüftungskanalaufbau (1) nach Anspruch 1, wobei an den jeweiligen Enden des Schutzbleches (18, 26) eine Öfnung (23) für Lufteinlass angeordnet ist, so dass Umgebungstuft ermöglicht wird, zwischen das Schutzblech und den isolierten Kanal (4) einzutreten.

3. Belüftungskanalaufbau (1) nach Anspruch 1 oder 2, der wenigstens an einem Abschnitt der Kanalwand Schallisolierung im Innern einer Außenabdeckung (10), mit dem Ziel, Geräusche zu dämpfen und infolgedessen eine schalldämmende Funktion bereitzustellen, umfasst, wobei der Luftspalt (22) zwischen dem Schutzblech (18,26) und der Außenabdeckung gebildet ist.

4. Belüftungskanalaufbau (1) nach Anspruch 3, wobei die Außenabdeckung (10) die Kanalwand (12) bildet.

5. Belüttungskanalaufbau (1) nach Anspruch 3, wobei die Schallisolierung (8) von innen durch eine kleine Öffnungen aufweisende Stützkonstruktion, bevorzugt ein perforiertes Rohr, gehalten wird, wobei die Stützkonstruktion die Kanalwand bildet.

6. Belüftungskanalaufbau (1) nach einem der vorhergehenden Ansprüche, der wenigstens an einem Abschnitt der Kanalwand (12) Feuerisolierung (8), die auf der Außenseite der Kanalwand (4) angeordnet ist, umfasst, wobei der Luftspalt (22) zwischen dem Schutzblech (18, 26) und der feuerisolierten Kanalwand (4) gebildet ist.

7. Belüftuskanalaufbau (1) nach Anspruch 6, wobei die Feuerisolierung auf der Außenseite der Kanalwand (4) mit einer äußeren Oberflächenschicht, bevorzugt einer Metallabdeckung, versehen ist.

8. Belüftungskanalaufbau (1) nach einem der vorhergehenden Ansprüche, wobei Distanzmittel (20) angeordnet sind, um den Luftspalt (22) zu dimensionieren.

9. Belüftungskanalautbau (1) nach den Ansprüchen 7 und 8, wobei sich die Distanzmittel (20) zwischen dem Schutzblech und der Oberflächenschicht erstrecken.

10. Belüftungskanalaufbau (1) nach einem der Ansprüche 3 bis 5 und nach Anspruch 8, wobei sich die Distanzmittel (20) zwischen dem Schutzblech (18, 26) und der Außenabdeckung erstrecken.

11. Belüffungskanalaufbau (1) nach einem der vorhergehenden Anspruche" wobel der Abstand des Luftspaltes (22) ungefähr ein Millimeter oder einige Millimeter, bevorzugt ungefähr 1 mm, ist,

12. Belüftungskanalaufbau (1) nach einem der vorhergehenden Ansprüche, wobei die Dicke des Schutzbleches (18, 26) ungefähr ein Millimeter oder einige Millimeter, bevorzugt ungefähr 1 mm, ist.

13. Belüftungskanalaufbau (1) nach einem der vorhergehenden Ansprüche, Wobei das Schutzblech (18,26) mit Durchgangstöchern versehen ist.

14. Verfahren zum Erhöhen des feuerhemmenden. Vemögens eines Belüftungskanals (4), der durch Isolationsmittel (8) in Verbindung mit der Wand (12) des Kanals isoliert ist,
**gekennzeichnet durch** das Platzieren eines aus Metall gefertigten Schutzbleches (18, 26) äußerlich wenigstens teilweise um den isolierten Kanal in einem solchem Abstand, dass sich zwischen dem Schutzblech und dem isolierten Kanal ein Luftspalt (22) bildet.

15. Verfahren nach Anspruch 14, das des Weiteren den Schritt des derafligen An. ordnens des Schutzbleches (18, 26) umfasst, dass Umgebungsluft ermöglich wird, an den jeweiligen Enden des Schutzbleches zwischen das Schutzblech und den isollerten Kanal (4) einzutreten,

## Revendications

1. Ensemble (1) de conduit de ventilation comprenant un conduit de ventilation (4) à travers lequel de l'air peut s'écouler, le conduit étant isolé au moyen d'une isolation (8) en liaison avec la paroi (12) du conduit,
**caractérisé en ce qu'**une feuille protectrice (18, 26) en métal est agencée à l'extérieur au moins partiellement autour du conduit (4) avec son isolation (B) associée à une distance telle qu'un entrefer (22) est formé entre la feuille protectrice (18, 26) et le conduit isolé (4), moyennant quoi la capacité ignifuge, mesurée comme la capacité à résister à une hausse de température de l'air du conduit telle qu'elle entraîne une hausse de température sur l'extérieur de l'ensemble, c'est-à-dire sur l'extérieur de la feuille protectrice (18, 26), est considérablement augmentée.

2. Ensemble (1) de conduit de ventilation selon la revendication 1, dans lequel une ouverture (23) pour l'admission d'air est agencée au niveau des extrémités respectifs de la feuille protectrice (18, 26) de sorte que l'air ambiant puisse entrer entre la feuille protectrice et le conduit isolé (4).

3. Ensemble (1) de conduit de ventilation selon la revendication 1 ou 2 qui comprend, au moins au niveau d'une section de la paroi de conduit, une isolation phonique à l'intérieur d'un revêtement externe (10) en vue d'absorber le bruit et ainsi de fournir une fonction d'absorption phonique, l'entrefer (22) étant formé entre la feuille protectrice (18, 26) et le revêtement externe.

4. Ensemble (1) de conduit de ventilation selon la revendication 3, dans lequel ledit revêtement externe (10) constitue la paroi (12) de conduit.

5. Ensemble (1) de conduit de ventilation selon la revendication 3, dans lequel ladite isolation, phonique (8) est supportée depuis l'intérieur par un ensemble de support Soramine, de préférence un tuyau perforé, l'ensemble de support constituant la paroi de conduit.

6. Ensemble (1) de conduit de ventilation selon l'une quelconque des revendications précédentes, comprenant au moins au niveau d'une section de la paroi (12) de conduit, une isolation anti-incendie (8) qui est agencée sur l'extérieur de la paroi (4) de conduit, l'entrefer (22) étant fermé entre la feuille protectrice (18, 26) et la paroi (4) de conduit isolée contre le feu.

7. Ensemble (1) de conduit de ventilation selon la revendication 6, dans lequel l'isolation anti-incendie sur l'extérieur de la paroi (4) de conduit est prévue avec une couche superficielle externe, de préférence un revêtement métallique.

8. Ensemble (1) de conduit de ventilation selon l'une quelconque des revendications précédantes, dans lequel des moyens d'écartement (20) sont agencés de façon à porter à la dimension voulue ledit entrefer (22).

9. Ensemble (1) de conduit de ventilation selon les revendications 7 et 8, dans lequel lesdits moyens d'écartement (20) s'étendent entre la feuille protectrice et ladite couche superficielle.

10. Ensemble (1) de conduit do ventilation selon l'une quelconque des revendications 3 à 5 et la revendication 8, dans lequel lesdits moyens d'écartement (20) s'étendent entre la feuille protectrice (18, 26) et ledit revêtement externe.

11. Ensemble (1) de conduit de ventilation selon l'une quelconque des revendications précédentes, dans lequel la distance dudit entrefer (22) est d'environ un millimètre ou de quelques millimètres, de préférence d'environ 1 mm.

12. Ensemble (1) de conduit des ventilation selon l'une quelconque des revendications précédentes; dans lequel l'épaisseur de la feuille protectrice (18, 26) est d'environ un millimètre ou de quelques millimètres, de préférence d'environ 1 mm.

13. Ensemble (1) de conduit de Ventilation selon l'une quelconque des revendications précédentes, dans lequel la feuille protectrice (18, 26) est prévue avec des trous débouchants.

14. Procédé destiné à augmenter la capacité ignifuge d'un conduit de ventilation (4) qui est isolé au moyen d'une isolation (8) en liaison avec la paroi (12) du conduit,
**caractérisé en ce qu'**il comprend l'étape consistant à placer une feuille protectrice (16, 26) en métal à l'extérieur au moins partiellement autour du conduit isolé à une distance telle qu'un entrefer (22) est formé entre la feuille protectrice et le conduit isolé.

15. Procédé selon la revendication 14, comprenant en outre l'étape consistant à agencer la feuille protectrice (18, 26) de sorte que l'air ambiant puisse entrer entre la feuille protectrice et le conduit isolé (4) au niveau des extrémités respectives de la feuille protectrice,
